(19) Europäisches Patentamt
European Patent Office
Office européen des brevets

(11) EP 3 954 551 B1

(12) EUROPEAN PATENT SPECIFICATION

(45) Date of publication and mention of the grant of the patent:
**03.04.2024 Bulletin 2024/14**

(21) Application number: **21185724.8**

(22) Date of filing: **15.07.2021**

(51) International Patent Classification (IPC):
***B60C 11/03*** *(2006.01)* *B60C 11/00* *(2006.01)*

(52) Cooperative Patent Classification (CPC):
**B60C 11/033; B60C 11/0008; B60C 11/0327; B60C 11/0332;** B60C 1/0016; B60C 2011/0025

# (54) PNEUMATIC TIRE

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2020 JP 2020136293**

(43) Date of publication of application:
**16.02.2022 Bulletin 2022/07**

(73) Proprietor: **Sumitomo Rubber Industries, Ltd.
Kobe-shi, Hyogo-ken 651-0072 (JP)**

(72) Inventor: **TSUCHIDA, Tsuyoshi
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A2- 0 216 588**
**JP-A- 2006 103 618**
**US-A1- 2012 010 356**
**US-A1- 2014 200 321**
**US-A1- 2018 111 424**
**US-A1- 2018 291 188**
**US-A1- 2019 168 542**

- **A M Pichugin ET AL: "Use of the mechanical loss tangent at different temperatures for assessing the evaluation of tyres", International Polymer Science and Technology, 1 December 2006 (2006-12-01), pages T19-16, XP055409838, Shropshire Retrieved from the Internet: URL:http://www.polymerjournals.com/pdfdownload/985604.pdf**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

TECHNICAL FIELD

The present invention relates to a pneumatic tire.

BACKGROUND OF THE INVENTION

In recent years, with expansion and development in road networks in addition to remarkable enhancement in equipment and performance of automobiles, there are more opportunities for high-speed traveling, so that a tire having such a base tread as to improve always stable steering stability and ride quality particularly during high-speed traveling is called for.

For example, JP2004-269684 A discloses a pneumatic tire having a base tread compounded with collagen particles. However, the disclosed tire does not sufficiently satisfy compatibility between steering stability and ride quality during high-speed traveling. US2019/ 168542 A1 discloses a tread with shoulder land parts, center land parts, circumferential grooves, lug grooves and sipes, wherein the ratio of the sum of tire widthwise extending lengths of the lug grooves and sipes to the tire circumferential length is 6.0 to 8.0.

SUMMARY OF THE INVENTION

An object of the present invention is to provide a tire satisfying compatibility between ride quality at low temperatures and steering stability during high-speed traveling.

As a result of intensive studies, the present inventor has found that a tire satisfying compatibility between ride quality at low temperatures and steering stability during high-speed traveling may be obtained by making a viscoelasticity of a tread rubber and a tread pattern specific conditions in a tire in which a cross-sectional width of the tire and an outer diameter of the tire satisfy predetermined requirements, and completed the present invention.

That is, the present invention relates to:

A pneumatic tire comprising a tread part, wherein the tread part has two or more circumferential grooves extending continuously in a circumferential direction of the tire, a pair of shoulder land parts partitioned by the circumferential grooves and a center land part located between the pair of shoulder land parts, and width direction grooves, and may arbitrarily have sipes; wherein, when a tire cross-sectional width is Wt (mm) and a tire outer diameter is Dt (mm), Wt and Dt satisfy Equation (1) below; wherein, when a length in the circumferential direction of the tire is La and a total sum of a total Lb 1 of edge component lengths in a width direction of the width direction grooves and a total Lb2 of edge component lengths in a width direction of the sipes is Lb, La and Lb satisfy Equation (2) below; wherein the tread part has at least one rubber layer composed of a rubber composition comprising a rubber component; and wherein tan δ at 5°C (5°C tan δ), tan δ at 20°C (20°C tan δ), and tan δ at 50°C (50°C tan δ) of the rubber composition measured under conditions of frequency 10 Hz and elongation strain 2.5% satisfy Equation (3) and Equation (4) below:

$$\text{Equation (1)}\ 1963.4\text{mm} \leqq (\pi/4)\times(Dt^{\wedge}2/Wt) \leqq 2827.4\text{mm};$$

$$\text{Equation (2)}\ 0.10 \leqq La/Lb \leqq 0.50;$$

$$\text{Equation (3)}\ 0.01 \leqq |20^{\circ}\text{C}\ \tan\delta + 50^{\circ}\text{C}\ \tan\delta|/2 \leqq 0.17$$

; and

$$\text{Equation (4)}\ 0.30 \leqq |5^{\circ}\text{C}\ \tan\delta + 20^{\circ}\text{C}\ \tan\delta|/2 \leqq 0.60,$$

wherein 5°C tan δ of the rubber composition is 0.70 or more and 20°C tan δ of the rubber composition is 0.15 or less;

Preferred embodiments of the invention are defined in the dependent claims.

The pneumatic tire according to the present invention makes it possible to satisfy compatibility between ride quality at low temperatures and steering stability during high-speed traveling by making a cross-sectional width and an outer diameter of a tire, a viscoelasticity of a tread rubber, and a tread pattern specific conditions. The following disclosure

shows embodiments that are part of the present invention.

BRIEF DESCRIPTION OF THE DRAWINGS

FIG. 1 is a partial development view showing a tread pattern of a pneumatic tire according to the present invention.

DETAILED DESCRIPTION

Below, with reference to the drawings, a pneumatic tire according to one embodiment of the present invention will be described.

The embodiment shown below is merely illustrative, and the pneumatic tire according to the present invention is not limited to the embodiment below.

FIG. 1 is a development view of a tread part 1. In the tread part 1 is formed a tread pattern in which an orientation of mounting to a vehicle is designated. The tread pattern of the tread part 1 is formed in an unsymmetrical shape with respect to a tire equator C.

The tread part 1 has an outer tread end To and an inner tread end Ti. The outer tread end To is located outer to the vehicle (on the right side in FIG. 1) at the time of mounting to the vehicle. The inner tread end Ti is located inner to the vehicle (on the left side in FIG. 1) at the time of mounting to the vehicle.

Each of the tread ends To, Ti is a grounding position being outermost in a tire width direction W (a left/right direction in FIG. 1; below called merely a width direction W) when a normal load is applied to the tire in a normal state, which tire is grounded onto a flat surface at a camber angle of 0 degrees. The normal state is a state in which the tire is rim assembled to a normal rim and filled with a normal internal pressure, and is, even more, in a non-load state. In the present specification, unless otherwise specified, dimensions of each part of the tire (a tire cross-sectional width Wt, a tire outer diameter Dt, etc.) have values measured in the normal state. In the normal state, a distance in the width direction W between the outer tread end To and the inner tread end Ti is defined as a tread width TW.

The "normal rim" is a rim defined for each tire by the standard, in a standard system including a standard on which the tire is based, and is a "standard rim" for JATMA, a "Design Rim" for TRA, or a "Measuring Rim" for ETRTO.

The "normal internal pressure" is an air pressure defined for each tire by each standard, in a standard system including a standard on which the tire is based, and is "a maximum air pressure" for JATMA, a maximum value described in the table "TIRE LOAD LIMITS AT VARIOUS COLD INFLATION PRESSURES" for TRA, or "INFLATION PRESSURE" for ETRTO.

The "normal load" is a load defined for each tire by each standard, in a standard system including a standard on which the tire is based, and is "a maximum load rating" for JATMA, a maximum value described in the table "TIRE LOAD LIMITS AT VARIOUS COLD INFLATION PRESSURES" for TRA, or "LOAD CAPACITY" for ETRTO.

The tread part 1 has a plurality of circumferential grooves 11, 12, 13 extending continuously in a circumferential direction C. In FIG. 1, three of the circumferential grooves 11, 12, 13 are provided. However, the number of circumferential grooves is not particularly limited, so that it may be 2 to 5, for example. Moreover, in the present disclosure, the circumferential grooves 11, 12, 13 extend linearly along the circumferential direction C, but is not limited to such an aspect, and, for example, may extend in a wavy, sinusoidal, or zigzag shape along the circumferential direction C.

A groove width of each of the circumferential grooves 11, 12, 13 may be arbitrarily determined according to the conventions. To provide sufficient drainage performance while maintaining a pattern rigidity of the tread part 1, the groove width of each of the circumferential grooves 11, 12, 13 preferably is approximately 2.5% to 5% of the tread width TW, for example. A groove depth of each of the circumferential grooves 11, 12, 13 is not particularly limited, but is preferably 5.0 to 12.0 mm, more preferably 6.0 to 11.0 mm, and further preferably 7.0 to 10.0 mm.

In the present disclosure, "shoulder land parts" refer to a pair of land parts formed between a circumferential groove located outermost in the width direction W with respect to the tire equator C and each of the tread ends To, Ti. In FIG. 1, each of an outer shoulder land part 16 formed between the circumferential groove 12 located outermost at the time of mounting to the vehicle and the outer tread end To and an inner shoulder land part 17 formed between the circumferential groove 11 located innermost at the time of mounting to the vehicle and the inner tread end Ti is provided.

In the shoulder land parts 16, 17, a plurality of shoulder width direction grooves 21, 22 and a plurality of shoulder sipes 23, 24 extending in a direction traversing the shoulder land parts 16, 17 are provided. The plurality of shoulder width direction grooves 21, 22 and the plurality of shoulder sipes 23, 24 are provided in each of the pair of shoulder land parts 16, 17. Besides, in the present specification, the shoulder width direction groove and the shoulder sipe provided in the outer shoulder land part 16 are called the outer shoulder width direction groove 21 and the outer shoulder sipe 23, respectively. Moreover, the shoulder width direction groove and the shoulder sipe provided in the inner shoulder land part 17 are called the inner shoulder width direction groove 22 and the inner shoulder sipe 24, respectively.

In the present disclosure, a "center land part" refer to the entirety of land parts sandwiched by the pair of

shoulder land parts. Each of an outer center land part 18 formed between the circumferential groove 13 provided along the tire equator C and the circumferential groove 12 located outermost at the time of mounting to the vehicle and an inner center land part 19 formed between the circumferential groove 13 provided along the tire equator C and the circumferential groove 11 located innermost at the time of mounting to the vehicle are provided in FIG. 1, but the number of center land parts is not particularly limited and may be 1 to 5, for example.

In the center land parts 18, 19 are provided a plurality of center width direction grooves 25, 26 and a plurality of center sipes 27, 28 extending in a direction traversing the center land parts 18, 19. The plurality of center width direction grooves 25, 26 and the plurality of center sipes 27, 28 are provided in each of the center land parts 18, 19. Besides, in the present specification, the center width direction groove and the center sipe provided in the outer center land part 18 are called the outer center width direction groove 25 and the outer center sipe 27, respectively. Moreover, the center width direction groove and the center sipe provided in the inner center land part 19 are called the inner center width direction groove 26 and the inner center sipe 28, respectively.

A groove width of each of the width direction grooves 21, 22, 25, 26 preferably is approximately 2.5% to 5% of the tread width TW, for example. A groove depth of each of the width direction grooves 21, 22, 25, 26 is not particularly limited, but is preferably 5.0 to 12.0 mm, more preferably 6.0 to 11.0 mm, and further preferably 7.0 to 10.0 mm. Besides, in the present specification, a "sipe" refers to a narrow notch having a width of 2.0 mm or less, preferably 0.5 to 1.5 mm.

In the shoulder land parts 16, 17 may be provided shoulder fine grooves 29, 30 extending in a tire circumferential direction. In this way, the shoulder land parts 16, 17 are partitioned into outer pieces 16A, 17A arranged between the shoulder fine grooves 29, 30 and the tread ends To, Ti and inner pieces 16B, 17B arranged toward the tire equator C side with respect to the outer pieces.

By providing such shoulder fine grooves 29, 30, edge components in the tire circumferential direction are increased, improving turning performance. Moreover, a rigidity in the tire circumferential direction of the outer pieces 16A, 17A and the inner pieces 16B, 17B is greatly secured, improving traveling performance on a dry road. Besides, in the present disclosure, the shoulder fine grooves 29, 30 extend linearly along the circumferential direction C, but is not limited to such an aspect, and, for example, may extend in a wavy, sinusoidal, or zigzag shape along the circumferential direction C. A groove width W2 of the shoulder fine grooves 29, 30 is preferably 1.0% to 2.0% of the tread width TW, for example. A groove depth of the shoulder fine grooves 29, 30 is preferably 0.40 to 0.60 times a groove depth of a deepest part of the circumferential grooves 11, 12, 13.

Moreover, in the present embodiment, as shown in FIG. 1, the sipes 27, 28 of the center land parts 18, 19 extend so as to connect both edge parts of the center land parts 18, 19 in the width direction W. An angle $\theta$ formed by a straight line connecting both ends in the width direction W of the sipes 27, 28 of the center land parts 18, 19 and the circumferential groove 12 is preferably in a range of 60 to 80 degrees. In this case, a water film may be raked out in the center land parts 18, 19, making it possible to improve braking performance on a wet road surface.

The tire according to the present invention is characterized in that, when a tire cross-sectional width is Wt (mm) and a tire outer diameter is Dt (mm), Wt and Dt satisfy Equation (1) below:

$$\text{Equation (1)}\ 1963.4\text{mm} \leqq (\pi/4)\times(Dt^{\wedge}2/Wt) \leqq 2827.4\text{mm}$$

Besides, in the specification, the "tire cross-sectional width" is a maximum width between side wall outer surfaces in the normal state, with any patterns or letters on tire side surfaces being excluded.

Moreover, in the tire according to the present invention, when a length in the circumferential direction C of the tire 1 is La and a total sum of a total Lb 1 of edge component lengths in the width direction W of the width direction grooves 21, 22, 25, 26 and a total Lb2 of edge component lengths in the width direction W of the sipes 23, 24, 27, 28 is Lb, La and Lb satisfy Equation (2) below:

$$\text{Equation (2)}\ 0.10 \leqq La/Lb \leqq 0.50.$$

A value (La/Lb) of Equation (2) is 0.10 or more, preferably 0.11 or more, more preferably 0.12 or more, further preferably 0.13 or more, and particularly preferably 0.14 or more. Moreover, the value (La/Lb) of Equation (2) is 0.50 or less, preferably 0.45 or less, more preferably 0.40 or less, further preferably 0.30 or less, and particularly preferably 0.25 or less. When the relationship between edge component lengths of the width direction grooves 21, 22, 25, 26 and the sipes 23, 24, 27, 28 and the length La in the circumferential direction C of the tire 1 is within the above-mentioned range, deforming of the tread part 1 may be restricted within a predetermined range and an area of the land parts 16, 17, 18, 19 of the tread part 1 may be secured as a predetermined area or more, making it possible to improve steering stability during high-speed traveling when a below-described rubber composition is used for the tread.

Besides, "edge components lengths in the width direction W" of the width direction grooves 21, 22, 25, 26 and

the sipes 23, 24, 27, 28 refer to lengths of projections in the width direction W (Of width direction components and circumferential direction components, the width direction components) of the width direction grooves 21, 22, 25, 26 and the sipes 23, 24, 27, 28.

Moreover, a ratio La/Lb1 of the length La of the tire in the circumferential direction C and the total Lb1 of edge component lengths in the width direction W of the width direction grooves 21, 22, 25, 26 is preferably 0.18 to 0.70, more preferably 0.21 to 0.60, further preferably 0.24 to 0.50. When the relationship between the total Lb1 of edge component lengths in the width direction W of the width direction grooves 21, 22, 25, 26 and the length La in the circumferential direction C of the tire 1 is within the above-mentioned range, the effects of the below-described rubber composition may be further enhanced.

Furthermore, a ratio $Lb_{sh}/Lb_{ce}$ between a total sum $Lb_{sh}$ of a total $Lb_{sh}1$ of edge component lengths in the width direction W of the width direction grooves 21, 22 in the shoulder land parts 16, 17 and a total $Lb_{sh}2$ of edge component lengths in the width direction W of the sipes 23, 24 in the shoulder land parts 16, 17 and a total sum $Lb_{ce}$ of a total $Lb_{ce}1$ of edge component lengths in the width direction W of the width direction grooves 25, 26 in the center land parts 18, 19 and a total $Lb_{ce}2$ of edge component lengths in the width direction W of the sipes 27, 28 in the center land parts 18, 19 preferably satisfies $Lb_{sh}/Lb_{ce} < 1$. In this case, the edge components in the shoulder land parts 16, 17 decrease, increasing the rigidity of the shoulder land parts 16, 17. In this way, abrasion of the shoulder land parts 16, 17 is suppressed, making it possible to improve steering stability during high-speed traveling.

In the tire according to the present invention, when an area of the entirety of land parts with the tread part being pressed against the flat surface with a normal load being applied in the normal state is Sr and a total area of the center land part is $S_{ce}$, Sr and $S_{ce}$ satisfy Equation (5) below:

$$\text{Equation (5) } 0.35 \leqq S_{ce}/Sr \leqq 0.80.$$

A value ($S_{ce}$/Sr) of Equation (5) is preferably 0.35 or more, more preferably 0.38 or more, further preferably 0.40 or more, and particularly preferably 0.42 or more. Moreover, the value ($S_{ce}$/Sr) of Equation (5) is preferably 0.80 or less, more preferably 0.70 or less, further preferably 0.60 or less, and particularly preferably 0.55 or less. When a ratio of the total area of the center land part to the area of the entirety of tire land parts is within the above-mentioned range, a volume of the center land part may be increased and a land part rigidity may be increased, making it possible to obtain a better steering stability.

Moreover, from a viewpoint of obtaining the similar effects, a land part width of at least one center land part is preferably 1.4 times or more, more preferably 1.5 times or more, and further preferably 1.6 times or more of a groove depth of a circumferential groove being adjacent outside in the tire width direction.

In the tire according to the present invention, when a grounding area of the tread part is St and a total sum of a total area Sg1 of the circumferential grooves and a total area Sg2 of the width direction grooves and the sipes is Sg, St and Sg preferably satisfy Equation (6) below:

$$\text{Equation (6) } 0.15 \leqq Sg/St \leqq 0.35.$$

Besides, in the specification, the "grounding area of the tread part" is a grounding area of the tread part with all of the grooves of the tread part 1 being buried.

A value (Sg/St) of Equation (6) is preferably 0.15 or more, more preferably 0.18 or more, and further preferably 0.21 or more. Moreover, the value (Sg/St) of Equation (6) is preferably 0.35 or less, more preferably 0.30 or less, and further preferably 0.25 or less.

Sg1/St is preferably 0.09 or more, more preferably 0.10 or more, and further preferably 0.11 or more. Moreover, Sg1/St is preferably 0.16 or less, more preferably 0.14 or less, and further preferably 0.13 or less.

Sg2/St is preferably 0.08 or more, more preferably 0.09 or more, and further preferably 0.10 or more. Moreover, Sg2/St is preferably 0.14 or less, more preferably 0.13 or less, and further preferably 0.12 or less.

When proportions of a total groove area, a total area of the circumferential grooves, and a total area of the width direction grooves and the sipes to a grounding area are within the above-mentioned ranges, a land part rigidity of the tread may be increased, and, by the synergistic effects with rubber flexibility provided by a rubber composition for a tread according to the present disclosure, ride quality at low temperatures may be improved while demonstrating high steering stability during high-speed traveling. When the proportions of the total groove area, the total area of the circumferential grooves, and the total area of the width direction grooves and the sipes to the grounding area are within the above-mentioned ranges, a proportion of the land part becomes too large, causing a tendency for drainage performance or grip performance to decrease. On the other hand, when the proportions of the total groove area, the total area of the circumferential grooves, and the total area of the width direction grooves and the sipes to the grounding area exceed

the above-mentioned ranges, a sufficient tread land part rigidity cannot be obtained, causing a tendency for steering stability to decrease.

Besides, in the present specification, the area Sr of the entirety of land parts, the total area $S_{ce}$ of the center land part, the total area Sg1 of the circumferential grooves, and the total area Sg2 of the width direction grooves and sipes are calculated from a grounding shape when the tread is pressed against the flat surface with a normal load being applied in the normal state. The grounding shape is obtained by mounting a tire to a normal rim and holding a normal internal pressure in the tire, and, then, for example, coating ink and applying a normal load to the tread part 1 to vertically press the tread part 1 against thick paper, etc., (at a camber angle of 0 degrees), transferring thereto ink coated to the tread part 1. Moreover, an area obtained by an outer ring of the grounding shape obtained is a grounding area St of the tread part with all of the grooves thereof being buried.

"5°C tan δ", "20°C tan δ", and "50°C tan δ" in the present invention refer to loss tangents of tan δ at 5°C, tan δ at 20°C, and tan δ at 50°C of the rubber composition, respectively, measured under conditions of frequency 10 Hz and elongation strain 2.5%. The rubber composition used in in the tread part of a pneumatic tire to the present invention is characterized in that 5°C tan δ, 20°C tan δ, and 50°C tan δ satisfy Equation (3) below and Equation (4) below:

$$\text{Equation (3) } 0.01 \leqq |20°\text{C } \tan\delta + 50°\text{C } \tan\delta|/2 \leqq 0.17$$

; and

$$\text{Equation (4) } 0.30 \leqq |5°\text{C } \tan\delta + 20°\text{C } \tan\delta|/2 \leqq 0.60.$$

From the viewpoint of the effects of the present invention, a value (|20°C tanδ+50°C tanδ|/2) of the Equation (3) is 0.01 or more, preferably 0.03 or more, more preferably 0.05 or more, further preferably 0.07 or more, and particularly preferably 0.09 or more. Moreover, a value (|20°C tanδ+50°C tanδ|/2) of the Equation (3) is 0.17 or less, preferably 0.16 or less, more preferably 0.15 or less, further preferably less than 0.15, further preferably 0.14 or less, further preferably less than 0.14, and particularly preferably 0.13 or less.

From the viewpoint of the effects of the present invention, a value (|5°C tanδ+20°C tanδ|/2|) of the Equation (4) is 0.30 or more, preferably 0.32 or more, more preferably 0.34 or more, further preferably 0.36 or more, and particularly preferably 0.38 or more. Moreover, the value (|5°C tanδ+20°C tanδ|/2|) of the Equation (4) is 0.60 or less, preferably 0.58 or less, more preferably less than 0.56, further preferably 0.54 or less, and particularly preferably 0.52 or less.

From the viewpoint of the effects of the present invention, 5°C tanδ is 0.70 or more, further preferably 0.80 or more, and particularly preferably 0.85 or more. Moreover, an upper limit of 5°C tanδ is not particularly limited, but it is preferably 1.50 or less, more preferably 1.40 or less, and further preferably 1.30 or less.

From the viewpoint of the effects of the present invention, 20°C tanδ is 0.15 or less, and particularly preferably 0.10 or less. Moreover, a lower limit of 20°C tanδ is not particularly limited, but it is preferably 0.01 or more, more preferably 0.03 or more, and further preferably 0.05 or more.

From the viewpoint of the effects of the present invention, the ratio of the value of Equation (3) to the value of the Equation (2) is preferably 0.15 or more, more preferably 0.30 or more, and further preferably 0.45 or more. Moreover, the ratio of the value of Equation (3) to the value of the Equation (2) is preferably 1.05 or less, more preferably 0.95 or less, and further preferably 0.85 or less.

From the viewpoint of the effects of the present invention, the ratio of the value of Equation (4) to the value of the Equation (2) is preferably 1.8 or more, more preferably 2.1 or more, and further preferably 2.4 or more. Moreover, the ratio of the value of Equation (4) to the value of the Equation (2) is preferably 3.8 or less, more preferably 3.6 or less, and further preferably 3.4 or less.

From the viewpoint of the effects of the present invention, the ratio of the value of Equation (3) to the value of the Equation (5) is preferably 0.05 or more, more preferably 0.10 or more, and further preferably 0.15 or more. Moreover, the ratio of the value of Equation (3) to the value of the Equation (2) is preferably 0.40 or less, more preferably 0.35 or less, and further preferably 0.30 or less.

From the viewpoint of the effects of the present invention, the ratio of the value of Equation (4) to the value of the Equation (5) is preferably 0.70 or more, more preferably 0.75 or more, and further preferably 0.80 or more. Moreover, the ratio of the value of Equation (4) to the value of the Equation (2) is preferably 1.50 or less, more preferably 1.30 or less, and further preferably 1.10 or less.

From the viewpoint of the effects of the present invention, the ratio of the value of Equation (4) to the value of the Equation (6) is preferably 1.5 or more, more preferably 1.6 or more, and further preferably 1.7 or more. Moreover, the ratio of the value of Equation (4) to the value of the Equation (6) is preferably 3.0 or less, more preferably 2.7 or less, and further preferably 2.4 or less.

The tread part according to the present invention has at least one rubber layer. The rubber layer may be formed by a single rubber layer, or one or more rubber layer may further be provided inside in a tire radial direction of a rubber layer (a cap rubber layer) which outer surface constitutes a tread surface. When the rubber layer is constituted by two or more layers, at least one of the two or more rubber layers may be constituted by the above-mentioned predetermined rubber composition, and the cap rubber layer is preferably constituted by the above-mentioned predetermined rubber composition.

The above-mentioned predetermined rubber composition is preferably used for a rubber layer, a part or all of which rubber layer is present outside in the tire radial direction with respect to the deepest part of a groove bottom of the deepest groove of the circumferential grooves 11, 12, 13 and the width direction grooves 21, 22, 25, 26, and more preferably used for a rubber layer, all of which rubber layer is present outside in the tire radial direction with respect to the deepest part of the groove bottom thereof. When the above-mentioned predetermined rubber composition is used for the cap rubber layer, the cap rubber layer is preferably present outside in the tire radial direction with respect to the deepest part of the groove bottom of the deepest groove of the circumferential grooves 11, 12, 13 and the width direction grooves 21, 22, 25, 26.

[Rubber composition]

The tire of the present invention may more effectively improve ride quality at low temperatures and steering stability during high-speed traveling by the above-mentioned structure of the tire, particularly the shape of the tread, and the above-described physical properties of the rubber composition cooperating with each other.

<Rubber component>

The rubber composition preferably comprises at least one selected from the group consisting of an isoprene-based rubber, a styrene-butadiene rubber (SBR), and a butadiene rubber (BR) as rubber components and more preferably comprises an SBR, and further preferably comprises an SBR and a BR, and may comprise a rubber component composed of an SBR and a BR only.

(SBR)

The SBR is not particularly limited, and examples thereof include a solution-polymerized SBR (S-SBR), an emulsion-polymerized SBR (E-SBR), modified SBRs thereof (a modified S-SBR, a modified E-SBR), and the like. Examples of the modified SBR include an SBR modified at its terminal and/or main chain, a modified SBR coupled with tin, a silicon compound, etc. (a modified SBR of condensate or having a branched structure, etc.), and the like. Among them, an S-SBR and a modified SBR are preferable. Furthermore, hydrogenated additives of these SBRs (hydrogenated SBRs) and the like may also be used. These SBRs may be used alone or two or more thereof may be used in combination.

As the S-SBRs that may be used in the present invention, those manufactured and sold by JSR Corporation, Sumitomo Chemical Co., Ltd., Ube Industries, Ltd., Asahi Kasei Corporation, ZS Elastomer Co., Ltd., etc. can be used.

A styrene content of the SBR is preferably 10% by mass or more, more preferably 15% by mass or more, further preferably 20% by mass or more, from the viewpoints of wet grip performance and abrasion resistance. Moreover, it is preferably 60% by mass or less, more preferably 55% by mass or less, further preferably 50% by mass or less, from the viewpoints of temperature dependence of grip performance and blow resistance. Besides, in the present specification, the styrene content of the SBR is calculated by $^1$H-NMR measurement.

A vinyl content of the SBR is preferably 10 mol% or more, more preferably 15 mol% or more, further preferably 20 mol% or more, from the viewpoints of ensuring reactivity with silica, wet grip performance, rubber strength, and abrasion resistance. Moreover, the vinyl content of the SBR is preferably 70 mol% or less, more preferably 65 mol% or less, further preferably 60 mol% or less, from the viewpoints of preventing temperature dependence from increasing, elongation at break, and abrasion resistance. Besides, in the present specification, the vinyl content (1,2-bond butadiene unit amount) of the SBR is measured by infrared absorption spectrometry.

A weight-average molecular weight (Mw) of the SBR is preferably 200,000 or more, more preferably 250,000 or more, further preferably 300,000 or more, from the viewpoint of wet grip performance. Moreover, the weight-average molecular weight is preferably 2,000,000 or less, more preferably 1,800,000 or less, further preferably 1,500,000 or less, from the viewpoint of cross-linking uniformity. Besides, in the present specification, the weight-average molecular weight of the SBR can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation).

When the rubber composition comprises SBR, the content thereof based on 100% by mass of the rubber component is preferably 40% by mass or more, more preferably 50% by mass or more, further preferably 60% by mass

or more, particularly preferably 70% by mass or more, from the viewpoint of wet grip performance. Moreover, an upper limit of the content of SBR in the rubber component is not particularly limited and the content of SBR in the rubber component may be 100% by mass.

(BR)

The BR is not particularly limited, and those commonly used in the tire industry can be used, such as, for example, a BR having a cis-1,4 bond content (cis content) of less than 50% (a low cis BR), a BR having a cis-1,4 bond content of 90% or more (a high cis BR), a rare earth-based butadiene rubber synthesized using a rare earth element-based catalyst (a rare earth-based BR), a BR containing a syndiotactic polybutadiene crystal (a SPB-containing BR), and a modified BR (a high cis modified BR, a low cis modified BR). These BRs may be used alone or two or more thereof may be used in combination.

Examples of modified BRs include those obtained by polymerizing 1,3-butadiene with a lithium initiator and then adding a tin compound and in which a modified BR molecule is bonded by a tin-carbon bond at its terminal (a tin-modified BR), a butadiene rubber having a condensate of the alkoxy silane compound in an active terminal thereof (a modified BR for silica), and the like. Examples of such modified BRs include a tin-modified BR and a modified BR for silica manufactured and sold by ZS Elastomer Co., Ltd., etc., for example.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation).

When the rubber composition comprises BR, the content thereof based on 100% by mass of the rubber component is preferably 50% by mass or less, more preferably 40% by mass or less, further preferably 30% by mass or less, particularly preferably 20% by mass or less, from the viewpoint of wet grip performance. Moreover, a lower limit of the content of BR is not particularly limited and the content of BR in the rubber component may be 1% by mass or more, 3% by mass or more, 5% by mass or more, 10% by mass or more, or 15% by mass or more, for example.

(Isoprene-based rubbers)

As the isoprene-based rubbers, those common in the tire industry such as an isoprene rubber (IR), a natural rubber, and the like, can be used. In the natural rubber, in addition to a non-modified natural rubber (NR), an epoxidized natural rubber (ENR), a hydrogenated natural rubber (HNR), a deproteinized natural rubber (DPNR), an ultra pure natural rubber, a modified natural rubber including a grafted natural rubber, etc., and the like are also included. These isoprene-based rubbers may be used alone or two or more thereof may be used in combination.

The NR is not particularly limited, so that, as the NR, those common in the tire industry such as, for example, SIR20, RSS#3, and TSR20, etc., can be used.

When the rubber composition comprises the isoprene-based rubber, the content thereof based on 100% by mass of the rubber component is preferably 50% by mass or less, more preferably 40% by mass or less, further preferably 30% by mass or less, particularly preferably 20% by mass or less, from the viewpoint of wet grip performance. Moreover, a lower limit of the content of the isoprene-based rubber is not particularly limited, but can be, for example, 1% by mass or more, 3% by mass or more, 5% by mass or more, 10% by mass or more, or 15% by mass or more.

(Other rubber components)

Rubber components other than the above-described isoprene-based rubbers, SBRs, and BRs may be compounded. As other rubber components, a cross-linkable rubber component commonly used in the tire industry can be used, such as, for example, a styrene-isoprene-butadiene copolymer rubber (SIBR), a styrene-isobutylene-styrene block copolymer (SIBS), a chloroprene rubber (CR), an acrylonitrile-butadiene rubber (NBR), a hydrogenated nitrile rubber (HNBR), a butyl rubber (IIR), an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone or two or more thereof may be used in combination.

<Filler>

The rubber composition, which may be used in a pneumatic tire according to the present invention comprises, as a filler, preferably silica and more preferably carbon black and silica.

(Carbon black)

As carbon black, those common in the tire industry can be appropriately used. Examples thereof include GPF, FEF, HAF, ISAF, and SAF, for example. These carbon blacks may be used alone or two or more thereof may be used in combination.
A nitrogen adsorption specific surface area ($N_2SA$) of carbon black is preferably 10 $m^2/g$ or more, more preferably 20 $m^2/g$ or more, from the viewpoint of reinforcing property. Moreover, it is preferably 200 $m^2/g$ or less, more preferably 150 $m^2/g$ or less, further preferably 100 $m^2/g$ or less, further preferably 80 $m^2/g$ or less, and particularly 50 $m^2/g$ or less, from the viewpoints of fuel efficiency and processability. Besides, the $N_2SA$ of carbon black is a value measured according to A Method under JIS K 6217-2 "Carbon black for rubber industry-Fundamental characteristics-Part 2: Determination of specific surface area-Nitrogen adsorption methods-Single-point procedures".
When the rubber composition comprises carbon black, the content thereof based on 100 parts by mass of the rubber component is, from the viewpoints of abrasion resistance and wet grip performance, preferably 1 part by mass or more, more preferably 3 parts by mass or more, and further preferably 5 parts by mass or more. Moreover, from the viewpoint of fuel efficiency, it is preferably 50 parts by mass or less, more preferably 35 parts by mass or less, further preferably 20 parts by mass or less, and particularly preferably 10 parts by mass or less.

(Silica)

Silica is not particularly limited, and, for example, those common in the tire industry can be used, such as silica prepared by a dry process (anhydrous silica) and silica prepared by a wet process (hydrous silica). Among them, hydrous silica prepared by a wet process is preferable because it has many silanol groups. These silicas may be used alone or two or more thereof may be used in combination.
A nitrogen adsorption specific surface area ($N_2SA$) of silica is preferably 140 $m^2/g$ or more, more preferably 170 $m^2/g$ or more, further preferably 200 $m^2/g$ or more, from the viewpoint of fuel efficiency and abrasion resistance. Moreover, it is preferably 350 $m^2/g$ or less, more preferably 300 $m^2/g$ or less, further preferably 250 $m^2/g$ or less, from the viewpoints of fuel efficiency and processability. Besides, the $N_2SA$ of silica in the present specification is a value measured by the BET method according to ASTM D3037-93.
When the rubber composition comprises silica, the content thereof based on 100 parts by mass of the rubber component is preferably 20 parts by mass or more, more preferably 40 parts by mass or more, further preferably 50 parts by mass or more, particularly preferably 60 parts by mass or more, from the viewpoint of wet grip performance. Moreover, it is preferably 130 parts by mass or less, more preferably 120 parts by mass or less, further preferably 110 parts by mass or less, from the viewpoint of abrasion resistance.
A total content of silica and carbon black in the rubber composition based on 100 parts by mass of the rubber component is preferably 40 parts by mass or more, more preferably 50 parts by mass or more, further preferably 60 parts by mass or more, from the viewpoint of abrasion resistance. Moreover, it is preferably 160 parts by mass or less, more preferably 140 parts by mass or less, further preferably 120 parts by mass or less, from the viewpoint of fuel efficiency and elongation at break.
A proportion of silica to the total content of silica and carbon black is preferably 60% by mass or more, more preferably 70% by mass or more, further preferably 80% by mass or more, and particularly preferably 85% by mass or more.

(Other fillers)

As fillers other than silica and carbon black, any filler commonly used in the tire industry conventionally, such as aluminum hydroxide, calcium carbonate, alumina, clay, talc, may be compounded.

<Silane coupling agent>

A silane coupling agent is preferably used in combination with silica. The silane coupling agent is not particularly limited, and any silane coupling agent conventionally used in combination with silica in the tire industry can be used, and examples thereof include, for example, a mercapto-based silane coupling agent as follows; a sulfide-based silane coupling agent such as bis(3-triethoxysilylpropyl)disulfide and bis(3-triethoxysilylpropyl)tetrasulfide; a vinyl-based silane coupling agent such as vinyltriethoxysilane and vinyltrimethoxysilane; an amino-based silane coupling agent such as 3-aminopropyltriethoxysilane, 3-aminopropyltrimethoxysilane, and 3-(2-aminoethyl) aminopropyltriethoxysilane; a glycidoxy-based silane coupling agent such as γ-glycidoxypropyltriethoxysilane and γ-glycidoxypropyltrimethoxysilane; a nitro-based silane coupling agent such as 3-nitropropyltrimethoxysilane and 3-nitropropyltriethoxysilane; a chloro-based silane coupling agent such as 3-chloropropyltrimethoxysilane and 3-chloropropyltriethoxysilane, and the like. Among

them, a sulfide-based silane coupling agent and/or a mercapto-based silane coupling agent are preferable, and a mercapto-based silane coupling agent is more preferable. These silane coupling agents may be used alone or two or more thereof may be used in combination.

The mercapto-based silane coupling agent is preferably a compound represented by the following formula (7) and/or a compound comprising a bond unit A represented by the following formula (8) and a bond unit B represented by the following formula (9):

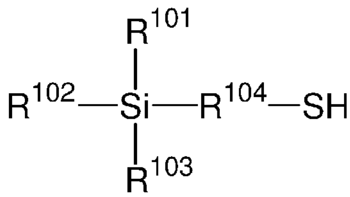

(7)

(Wherein, each of $R^{101}$, $R^{102}$, and $R^{103}$ independently represents a group represented by a $C_{1-12}$ alkyl, a $C_{1-12}$ alkoxy, or a $-O-(R^{111}-O)_z-R^{112}$ (Each of z $R^{111}$s independently represents a divalent hydrocarbon group having 1 to 30 carbon atoms; $R^{112}$ represents a $C_{1-30}$ alkyl, a $C_{2-30}$ alkenyl, a $C_{6-30}$ aryl, or a $C_{7-30}$ aralkyl; z represents an integer of 1 to 30); and $R^{104}$ represents a $C_{1-6}$ alkylene.)

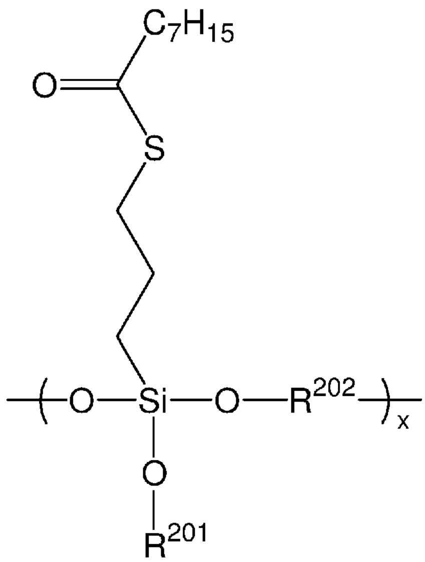

(8)

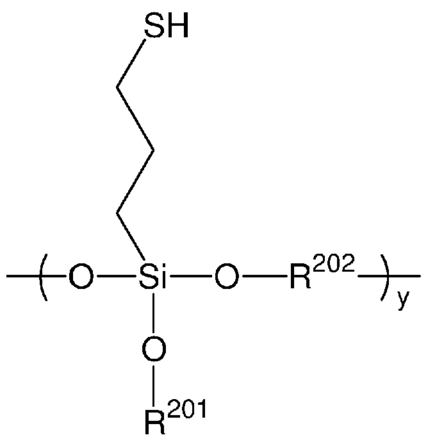

(9)

(Wherein, x represents an integer of 0 or more; y represents an integer of 1 or more; $R^{201}$ represents a $C_{1-30}$ alkyl, a $C_{2-30}$ alkenyl, or a $C_{2-30}$ alkynyl, which may be substituted with a hydrogen atom, a halogen atom, hydroxyl or carboxyl; $R^{202}$ represents a $C_{1-30}$ alkylene, a $C_{2-30}$ alkenylene, or a $C_{2-30}$ alkynylene; wherein $R^{201}$ and $R^{202}$ may form a ring structure.)

Examples of the compound represented by formula (7) include, for example, 3-mercaptopropyltrimethoxysilane, 3-mercaptopropyltriethoxysilane, 2-mercaptoethyltrimethoxysilane, 2-mercaptoethyltriethoxysilane, and a compound represented by formula (10) below (Si363 manufactured by Evonik Degussa), and the compound represented by formula (10) below can be appropriately used. They may be used alone or two or more thereof may be used in combination.

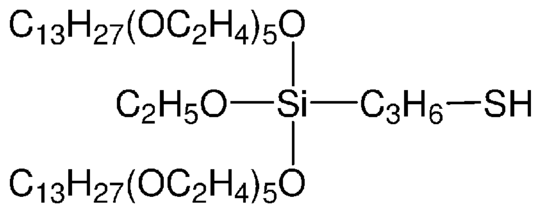

(10)

Examples of the compound comprising the bond unit A represented by formula (8) and the bond unit B represented by formula (9) include those manufactured by Momentive Performance Materials, and the like, for example. They may be used alone or two or more thereof may be used in combination.

When the rubber composition comprises the silane coupling agent, a total content thereof based on 100 parts by mass of the rubber component is preferably 0.5 parts by mass or more, more preferably 1.0 parts by mass or more, further preferably 2.0 parts by mass or more, particularly preferably 4.0 parts by mass or more, from the viewpoints of enhancing the dispersibility of silica. Moreover, it is preferably 20 parts by mass or less, more preferably 12 parts by mass or less, further preferably 10 parts by mass or less, particularly preferably 9.0 parts by mass or less, from the viewpoint of preventing deterioration of abrasion resistance.

A content of the silane coupling agent based on 100 parts by mass of silica (a total content of all of the silane coupling agent in a plurality when a combined use is made thereof) is preferably 1.0 parts by mass or more, more preferably 3.0 parts by mass or more, further preferably 5.0 parts by mass or more, from the viewpoint of enhancing the dispersibility of silica. Moreover, it is preferably 20 parts by mass or less, more preferably 15 parts by mass or less, further preferably 12 parts by mass or less, from the viewpoints of cost and processability.

As fillers, besides carbon black and silica, other fillers may further be used. Such fillers are not particularly limited and any filler commonly used in this field, such as aluminum hydroxide, alumina (aluminum oxide), calcium carbonate, magnesium sulfate, talc, clay, etc., can be used, and calcium carbonate is preferable. These fillers may be used alone or two or more thereof may be used in combination.

<Other compounding agents>

The rubber composition can appropriately comprise compounding agents commonly used in the conventional tire industry such as, for example, a softener, wax, processing aid, stearic acid, zinc oxide, an antioxidant, a vulcanizing agent, a vulcanization accelerator, etc., in addition to the above-described components.

<Softeners>

The rubber composition preferably comprises softeners. Examples of a softener include a resin component, oil, a liquid rubber, an ester-based plasticizer, etc., for example.

The resin component is not particularly limited, and examples thereof include a petroleum resin, a terpene-based resin, a rosin-based resin, a phenol-based resin, and the like being commonly used in the tire industry. These resin components may be used alone or two or more thereof may be used in combination.

In the present specification, a "C5-based petroleum resin" refers to a resin obtained by polymerizing a C5 fraction. Examples of the C5 fraction include, for example, a petroleum fraction equivalent to 4 to 5 carbon atoms such as cyclopentadiene, pentene, pentadiene, and isoprene, for example. As the C5-based petroleum resin, a dicyclopentadiene resin (DCPD resin) is appropriately used.

In the present specification, an "aromatic-based petroleum resin" refers to a resin obtained by polymerizing a C9 fraction, and may be hydrogenated or modified. Examples of the C9 fraction include, for example, a petroleum fraction equivalent to 8 to 10 carbon atoms such as vinyltoluene, alkylstyrene, indene, and methyl indene. As specific examples of the aromatic-based petroleum resin, for example, a coumarone indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to be processed, and good in heat generation. As the aromatic vinyl-based resin, for example, those commercially available from Kraton Corporation, Eastman Chemical Company, etc. can be used.

In the present specification, a "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin consisting of at least one selected from terpene compounds such as $\alpha$-pinene, $\beta$-pinene, limonene, and dipentene; an aromatic-modified terpene resin made from the terpene compound and an aromatic compound; a terpene phenol resin made from a terpene compound and a phenol-based compound; and those obtainable by hydrogenating these terpene-based resins (hydrogenated terpene-based resins). Examples of the aromatic compound used as a raw material for the aromatic-modified terpene resin include, for example, styrene, $\alpha$-methylstyrene, vinyltoluene, divinyltoluene, and the like. Examples of the phenol-based compound used as a raw material for the terpene phenol resin include, for example, phenol, bisphenol A, cresol, xylenol, and the like.

The rosin-based resin is not particularly limited, and examples thereof include, for example, a natural resin rosin, and a rosin modified resin being the natural resin rosin modified by hydrogenation, disproportionation, dimerization, or esterification.

The phenol-based resin is not particularly limited, and examples thereof include a phenolformaldehyde resin, an alkylphenolformaldehyde resin, an alkylphenol acetylene resin, an oil-modified phenolformaldehyde resin, and the like.

A softening point of the resin component is preferably 60°C or higher, more preferably 65°C or higher, from the viewpoint of wet grip performance. Moreover, it is preferably 150°C or lower, more preferably 140°C or lower, further preferably 130°C or lower, from the viewpoints of processability and improvement in dispersibility of a rubber component with a filler. Besides, in the present specification, the softening point can be defined as a temperature at which a sphere drops when the softening point specified in JIS K 6220-1: 2001 is measured with a ring and ball softening point measuring device.

When the rubber composition comprises the resin component, the content thereof based on 100 parts by mass of the rubber component is, from the viewpoint of wet grip performance, preferably 1 part by mass or more, more preferably 3 parts by mass or more, further preferably 5 parts by mass or more. Moreover, it is preferably 60 parts by mass or less, more preferably 50 parts by mass or less, further preferably 40 parts by mass or less, particularly preferably 30 parts by mass or less, from the viewpoint of suppressing heat generation.

Examples of oil include, for example, a process oil, a vegetable oil and fat, an animal oil and fat, and the like. Examples of the process oil include a paraffin-based process oil, a naphthene-based process oil, an aromatic-based process oil, and the like. Moreover, as an environmental measure, a process oil having a low content of a polycyclic aromatic compound (PCA) can also be used. Examples of the process oil having a low content of a PCA include a mild extraction solution (MES), a treated distillate aromatic extract (TDAE), a heavy naphthene-based oil, and the like.

When the rubber composition comprises the oil, the content thereof based on 100 parts by mass of the rubber component is, from the viewpoint of processability, preferably 5 part by mass or more, more preferably 10 parts by mass or more, further preferably 15 parts by mass or more. Moreover, it is preferably 120 parts by mass or less, more preferably 100 parts by mass or less, further preferably 90 parts by mass or less, from the viewpoint of abrasion resistance. Besides, in the present specification, the content of oil also includes an amount of oil contained in an oil-extended rubber.

The liquid rubber is not particularly limited as long as it is a liquid polymer at room temperature (25°C), and examples thereof include a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like, for example. These liquid rubbers may be used alone or two or more thereof may be used in combination.

When the rubber composition comprises the liquid rubber, the content thereof based on 100 parts by mass of the rubber component is preferably 1 part by mass or more, more preferably 2 parts by mass or more, further preferably 3 parts by mass or more, and particularly preferably 5 parts by mass or more. Moreover, it is preferably 50 parts by mass or less, more preferably 40 parts by mass or less, further preferably 20 parts by mass or less.

Examples of the ester-based plasticizer include, for example, dibutyl adipate (DBA), disobutyl adipate (DIBA), dioctyl adipate (DOA), di-2-ethylhexyl azelate (DOZ), dibutyl sebacate (DBS), disononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triephosphate (TTP), tricresyl phosphate (TCP), trixylenyl phosphate (TXP), and the like. These ester-based plasticizers may be used alone or two or more thereof may be used in combination.

When the rubber composition comprises the ester-based plasticizer, the content thereof based on 100 parts by mass of the rubber component is preferably 1 part by mass or more, more preferably 2 parts by mass or more, further preferably 3 parts by mass or more, and particularly preferably 5 parts by mass or more. Moreover, it is preferably 50 parts by mass or less, more preferably 40 parts by mass or less, further preferably 20 parts by mass or less.

A content of the softener based on 100 parts by mass of the rubber component (a total content of all of the softener in a plurality when a combined use is made thereof) is, from the viewpoint of wet grip performance, preferably 5 part by mass or more, more preferably 10 parts by mass or more, further preferably 15 parts by mass or more. Moreover,

it is preferably 120 parts by mass or less, more preferably 100 parts by mass or less, further preferably 90 parts by mass or less, and particularly preferably 80 parts by mass or less from the viewpoint of processability.

When the rubber composition comprises the wax, the content thereof based on 100 parts by mass of the rubber component is, from the viewpoint of weather resistance of a rubber, preferably 0.5 parts by mass or more, more preferably 1 part by mass or more. Moreover, it is preferably 10 parts by mass or less, more preferably 5 parts by mass or less, from the viewpoint of whitening of a tire due to bloom.

Examples of processing aid include, for example, a fatty acid metal salt, a fatty acid amide, an amide ester, a silica surface active agent, a fatty acid ester, a mixture of a fatty acid metal salt and an amide ester, a mixture of a fatty acid metal salt and a fatty acid amide, and the like. These processing aids may be used alone or two or more thereof may be used in combination. As processing aid, for example, those commercially available from Schill+Seilacher GmbH, Performance Additives, etc. can be used.

When the rubber composition comprises the processing aid, the content thereof based on 100 parts by mass of the rubber component is, from the viewpoint of exhibiting an effect of improving processability, preferably 0.5 parts by mass or more, more preferably 1 part by mass or more. Moreover, it is preferably 10 parts by mass or less, more preferably 8 parts by mass or less, from the viewpoints of abrasion resistance and breaking strength.

The antioxidant is not particularly limited, and examples thereof include, for example, each amine-based, quinoline-based, quinone-based, phenol-based, and imidazole-based compound, and an antioxidant such as a carbamate metal salt, preferably a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, and N-cyclohexyl-N'-phenyl-p-phenylenediamine, and a quinoline-based antioxidant such as 2,2,4-trimethyl-1,2-dihydroquinolin polymer and 6-ethoxy-2,2,4-trimethyl-1,2-dihydroquinolin. These antioxidants may be used alone or two or more thereof may be used in combination.

When the rubber composition comprises the antioxidant, the content thereof based on 100 parts by mass of the rubber component is, from the viewpoint of ozone crack resistance of a rubber, preferably 0.5 parts by mass or more, more preferably 1 part by mass or more. Moreover, it is preferably 10 parts by mass or less, more preferably 5 parts by mass or less, from the viewpoints of abrasion resistance and wet grip performance.

When the rubber composition comprises the stearic acid, the content thereof based on 100 parts by mass of the rubber component is, from the viewpoint of processability, preferably 0.5 parts by mass or more, more preferably 1 part by mass or more. Moreover, it is preferably 10 parts by mass or less, more preferably 5 parts by mass or less, from the viewpoint of vulcanization rate.

When the rubber composition comprises the zinc oxide, the content thereof based on 100 parts by mass of the rubber component is, from the viewpoint of processability, preferably 0.5 parts by mass or more, more preferably 1 part by mass or more. Moreover, it is preferably 10 parts by mass or less, more preferably 5 parts by mass or less, from the viewpoint of abrasion resistance.

Sulfur is appropriately used as the vulcanizing agent. As sulfur, a powdered sulfur, an oil-treated sulfur, a precipitated sulfur, a colloidal sulfur, an insoluble sulfur, a highly dispersible sulfur, and the like can be used.

A content of sulfur when compounded as the vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, from the viewpoint of preventing deterioration. Besides, a content of a vulcanizing agent when using an oil-containing sulfur as the vulcanizing agent shall be a total content of pure sulfur amounts comprised in the oil-containing sulfur.

Examples of vulcanizing agents other than sulfur include, for example, alkylphenol-sulfur chloride condensate, 1,6-hexamethylene-sodium dithiosulfate dehydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of vulcanization accelerators include, for example, sulfenamide-based, thiazole-based, thiuram-based, thiourea-based, guanidine-based, dithiocarbamic acid-based, aldehyde-amine-based or aldehyde-ammonia-based, imidazoline-based, xanthate-based vulcanization accelerators, and the like. These vulcanization accelerators may be used alone or two or more thereof may be used in combination. Among them, one or more selected from the group consisting of sulfenamide-based, guanidine-based, and thiazole-based vulcanization accelerators are preferable.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-tert-butyl-2-benzothiazolylsulfenamide (TBBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

When the rubber composition comprises the vulcanization accelerator, the content thereof based on 100 parts by mass of the rubber component is preferably 1 part by mass or more, more preferably 2 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerators is within the above-described ranges, there is a tendency to be able to secure breaking strength and elongation at break.

The rubber composition can be manufactured by a known method. For example, it can be manufactured by kneading each of the above-described components using a rubber kneading apparatus such as an open roll and a closed type kneader (Bunbury mixer, kneader, etc.).

The kneading step comprises, for example, a base kneading step of kneading compounding agents and additives other than vulcanizing agents and vulcanization accelerators, and a final kneading (F kneading) step of adding vulcanizing agents and vulcanization accelerators to the kneaded product obtained in the base kneading step and kneading them. Furthermore, the base kneading step can be divided into a plurality of steps, if desired.

Kneading conditions are not particularly limited, and, for example, a method of kneading at a discharge temperature of 150 to 170°C for 3 to 10 minutes in the base kneading step and kneading at 70 to 110°C for 1 to 5 minutes in the final kneading step is exemplified. Vulcanization conditions are not particularly limited, and, for example, a method of vulcanizing at 150 to 200°C for 10 to 30 minutes is exemplified.

A tire comprising a tread composed of the rubber composition can be manufactured by a usual method using the above-described rubber composition. That is, the tire can be manufactured by extruding unvulcanized rubber compositions compounded with each of the above-described components based on the rubber component as necessary into shapes of the tread, attaching them together with other tire members on a tire molding machine, and molding them by a usual method to form an unvulcanized tire, followed by heating and pressurizing this unvulcanized tire in a vulcanizing machine.

The rubber composition can be used for a tread of various tires including, for example, a tire for a passenger car, a tire for a truck/bus, a tire for a motorcycle, a high-performance tire, and a winter tire such as a studless tire. These tires may be a run flat tire comprising a side reinforcing layer; a tire with a sound-absorption member such as a sponge, which tire comprises the sound-absorption member in an inner cavity of the tire; a tire with a sealing member, which tire comprises, inside or in a cavity thereof, a sealant that can seal the tire at the time of puncture; a tire with an electronic component such as a sensor and a wireless tag, etc., which tire comprises, inside or in a cavity thereof, the electronic component.

EXAMPLE

Although the present invention will be specifically described based on Examples, it is not limited to these Examples only.

Various chemicals used in Examples and Comparative examples are collectively shown below.

SBR1: S-SBR manufactured in Manufacturing example 1 described later (styrene content: 30% by mass, vinyl content: 52 mol%, Mw: 250,000, non-oil-extended product)
SBR2: HP755 manufactured by JSR Corporation (S-SBR, styrene content: 40% by mass, vinyl content: 38 mol%, oil-extended product including 37.5 parts by weight of an oil component based on 100 parts by mass of a rubber component)
BR1: UBEPOL BR (registered trademark) 150B (cis content: 97%, Mw: 440,000) manufactured by Ube Industries, Ltd.
BR2: BR500 (cis content: 32%) manufactured by JSR Corporation
Carbon black: Diablack N220 ($N_2SA$: 115 $m^2/g$) manufactured by Mitsubishi Chemical Corporation
Silica 1: Zeosil 1115MP ($N_2SA$: 115$m^2/g$) manufactured by Solvay Japan, Ltd.
Silica 2: ULTRASIL (registered trademark) VN3 ($N_2SA$: 175$m^2/g$) manufactured by Evonik Degussa
Calcium carbonate: FP-300 manufactured by Calfine, Co., Ltd.
Silane coupling agent 1: Si266 (Bis(3-triethoxysilylpropyl)disulfide) manufactured by Evonik Degussa
Silane coupling agent 2: NXT-Z45 (mercapto-based silane coupling agent) manufactured by Momentive Performance Materials
Ester-based plasticizer: TOP (Tris(2-ethylhexyl) phosphate)) manufactured by Daihachi Chemical Industry Co., Ltd.
Resin component: Sylvatraxx 4401 (copolymer of alphamethylstyrene and styrene, softening point: 85°C) manufactured by Kraton Corporation

Antioxidant: Antigen 3C (N-isopropyl-N'-phenyl-p-phenylenediamine) manufactured by Sumitomo Chemical Co., Ltd.
Stearic acid: Bead stearic acid "Tsubaki" manufactured by NOF CORPORATION
Zinc oxide: Zinc oxide No. 1 manufactured by Mitsui Mining & Smelting Co., Ltd.
Sulfur: Powdered sulfur manufactured by Tsurumi Chemical Co., Ltd.
Vulcanization accelerator 1: Soxinol CZ (N-Cyclohexyl-2-benzothiazolylsulfenamide) manufactured by Sumitomo Chemical Co., Ltd.
Vulcanization accelerator 2: Soxinol D-G (N-N'-Diphenylguanidine) manufactured by Sumitomo Chemical Co., Ltd.

Manufacturing example 1: Synthesis of SBR1

Cyclohexane, tetrahydrofuran, styrene, and 1,3-butadiene were charged into a nitrogen-substituted autoclave reactor. The temperature of the contents of the reactor was adjusted to 20°C, and n-butyllithium was added to initiate polymerization. Polymerization was performed under an adiabatic condition, and the temperature reached 85°C of the maximum temperature. When a polymerization conversion rate reached 99%, 1,3-butadiene was added, and, after further polymerization for 5 minutes, N,N-bis(trimethylsilyl)-3-aminopropyltrimethoxysilane was added as a modifying agent to perform reaction. After completion of the polymerization reaction, 2,6-di-tert-butyl-p-cresol was added. Next, the mixed product was removed of solvent by steam stripping and dried by a heat roll, the temperature of which heat roll was adjusted to 110°C to obtain an SBR 1.

According to the compounding formulations shown in Table 1, using a 1.7 L closed Banbury mixer, all chemicals other than sulfur and vulcanization accelerators were kneaded at a discharge temperature of 160°C for 4 minutes to obtain a kneaded product. Next, using an open roll, sulfur and vulcanization accelerators were added to the obtained kneaded product, and the mixture was kneaded for 4 minutes to obtain an unvulcanized rubber composition. Moreover, the obtained unvulcanized rubber composition was press-vulcanized for 12 minutes under a condition of 170°C to obtain a vulcanized rubber sheet for testing.

Moreover, the obtained unvulcanized rubber composition was used to produce each rubber sheet to be in a shape of a tread, which rubber sheet was attached together with other tire members to produce a green tire. Next, in a vulcanization process, the green tire was press molded for 20 minutes at 170°C to produce a test tire having a size of 195/65R15.

<Measurement of tan δ>

A strip test piece having a width of 4 mm, a length of 20 mm, and a thickness of 2 mm was punched out of a sheet-shaped vulcanized rubber composition to be provided for testing. Under conditions of frequency 10 Hz and elongation strain 2.5%, tan δ at 5°C (5°C tan δ), tan δ at 20°C (20°C tan δ), and tan δ at 50°C (50°C tan δ) were measured using a dynamic viscoelasticity measurement apparatus EPLEXOR (registered trademark) series manufactured by GABO Qualimeter Testanlagen GmbH.

<Steering stability during high-speed traveling>

Each test tire was mounted to all wheels of a domestic FF vehicle with a displacement of 660 cc, and the actual vehicle was made to run on a test course having a dry asphalt surface at a temperature of 20°C to 30°C. Handling characteristics were evaluated based on feeling at each of the times of running straight, changing lanes, and accelerating/decelerating when running at 120 km/h by a test driver. Evaluation was performed using an integer value of 1 to 5 points, and a total score by 10 test drivers was calculated based on evaluation criteria in which the higher the score is, the better the handling characteristics is. The total score in Reference comparative example (Comparative example 1 in Table 3 and Table 4, Comparative example in Table 5 and 6) was converted into a reference value (100), and an evaluation result of each test tire was displayed as an index so as to be proportional to the total score.

<Steering stability during high-speed traveling>

Each test tire was mounted to all wheels of a domestic FF vehicle with a displacement of 660 cc, and the actual vehicle was made to run on a test course having a dry asphalt surface at a temperature of -1°C to -6°C, and test drivers performed a sensory evaluation of ride quality. Evaluation was performed using an integer value of 1 to 5 points, and a total score by 10 test drivers was calculated based on evaluation criteria in which the higher the score is, the better the handling characteristics is. The total score in Reference comparative example (Comparative example 1 in Table 3 and Table 4, Comparative example in Table 5 and 6) was converted into a reference value (100), and an evaluation result of each test tire was displayed as an index so as to be proportional to the total score.

Table 1

| | | Compounding of tread rubber | | | | | |
|---|---|---|---|---|---|---|---|
| | | A | B | C | D | E | F |
| Compounding amount (part by mass) | | | | | | | |
| | SBR 1 | 20 | 20 | 20 | 70 | 70 | 80 |
| | SBR 2 | 82.5 | 82.5 | 82.5 | | | |
| | (Oil content) | (22.5) | (22.5) | (22.5) | | | |
| | BR 1 | 20 | - | - | 30 | 30 | - |
| | BR 2 | - | 20 | 20 | - | - | 20 |
| | Carbon black | 5 | 5 | 5 | 5 | 5 | 5 |
| | Silica 1 | 30 | 30 | 30 | 30 | 30 | 30 |
| | Silica 2 | 30 | 30 | 30 | 30 | 30 | 30 |
| | Calcium carbonate | 30 | 30 | 30 | 30 | 30 | 30 |
| | Silane coupling agent 1 | 4.2 | 4.2 | | 5.2 | 5.2 | - |
| | Silane coupling agent 2 | - | - | 4.2 | - | - | 5.2 |
| | Ester-based plasticizer | 20 | 10 | - | 10 | - | - |
| | Resin component | - | 10 | 20 | - | 10 | 20 |
| | Antioxidant | 2.0 | 2.0 | 2.0 | 2.0 | 2.0 | 2.0 |
| | Stearic acid | 2.0 | 2.0 | 2.0 | 2.0 | 2.0 | 2.0 |
| | Zinc oxide | 2.0 | 2.0 | 2.0 | 2.0 | 2.0 | 2.0 |
| | Sulfur | 1.2 | 1.2 | 1.2 | 1.5 | 1.5 | 1.5 |
| | Vulcanization accelerator 1 | 2.0 | 2.0 | 2.0 | 2.0 | 2.0 | 2.0 |
| | Vulcanization accelerator 2 | 2.0 | 2.0 | 2.0 | 2.0 | 2.0 | 2.0 |
| Physical properties | | | | | | | |
| | 5°C tan δ | 0.65 | 0.70 | 0.80 | 0.85 | 0.92 | 1.02 |
| | 20°C tan δ | 0.05 | 0.10 | 0.10 | 0.15 | 0.18 | 0.22 |
| | 50°C tan δ | 0.01 | 0.08 | 0.08 | 0.09 | 0.12 | 0.14 |
| | \|20°C tan δ+50°C tan δ\|/2 | 0.03 | 0.09 | 0.09 | 0.12 | 0.15 | 0.18 |
| | \|5°C tan δ+20°C tan δ\|/2 | 0.35 | 0.40 | 0.45 | 0.50 | 0.55 | 0.62 |

Table 2

| | Tire | | | | | |
|---|---|---|---|---|---|---|
| | 1 | 2 | 3 | 4 | 5 | 6 |
| Tire size | 195/65R1 5 91H | 125/65R19 | 205/65R17 96H | 285/45R20 112Y | 225/45R22 | 275/50R22 111H |
| Tire cross-sectional width Wt (mm) | 195 | 125 | 205 | 285 | 225 | 275 |
| Tire outer diameter Dt (mm) | 634.5 | 645.1 | 698.3 | 764.5 | 761.3 | 833.8 |
| Value of Equation (1) (mm) | 1621 | 2613 | 1868.2 | 1609 | 2022 | 1986 |

Table 3

| | Example | | | | | | | | | |
|---|---|---|---|---|---|---|---|---|---|---|
| | 1 | 2 | 3 | 4 | 5 | 6 | 7 | 8 | 9 | 10 |
| Compounding of tread rubber | C | B | A | D | E | C | B | E | E | B |
| Tire | Tire 2 | Tire 2 | Tire 2 | Tire 2 | Tire 2 | Tire 2 | Tire 2 | Tire 2 | Tire 3 | Tire 3 |
| $S_{ce}$/Sr | 0.45 | 0.45 | 0.45 | 0.45 | 0.45 | 0.45 | 0.45 | 0.65 | 0.45 | 0.45 |
| La/Lb1 | 0.40 | 0.25 | 0.42 | 0.26 | 0.31 | 0.48 | 0.19 | 0.70 | 0.31 | 0.19 |
| La/Lb | 0.18 | 0.12 | 0.18 | 0.12 | 0.15 | 0.15 | 0.14 | 0.40 | 0.15 | 0.14 |
| $Lb_{sh}$ | 1.8La | 2.8La | 1. 9 La | 2.7La | 2.3La | 2.4La | 2.5La | 2.3La | 2.3La | 2.5La |
| $Lb_{ce}$ | 3.7La | 5.5La | 3.7La | 5.4La | 4.5La | 4.3La | 4.4La | 4.5La | 4.5La | 4.4La |
| Sg1/St | 0.12 | 0.12 | 0.12 | 0.12 | 0.12 | 0.12 | 0.12 | 0.12 | 0.12 | 0.12 |
| Sg2 / St | 0.10 | 0.10 | 0.10 | 0.10 | 0.10 | 0.10 | 0.10 | 0.10 | 0.10 | 0.10 |
| Index | | | | | | | | | | |
| Ride quality | 108 | 108 | 108 | 108 | 108 | 116 | 112 | 106 | 104 | 108 |
| Steering stability | 106 | 106 | 102 | 110 | 110 | 114 | 114 | 108 | 102 | 110 |

In Table 3, Examples 3, 5, and 8 to 10 are not according to the invention.

Table 4

| | Comparative example | | | |
|---|---|---|---|---|
| | 1 | 2 | 3 | 4 |
| Compounding of tread rubber | F | F | E | E |
| Tire | Tire 1 | Tire 3 | Tire 3 | Tire 3 |
| $S_{ce}$/Sr | 0.45 | 0.45 | 0.30 | 0.83 |
| La/Lb1 | 0.25 | 0.25 | 0.25 | 0.25 |
| La/Lb | 0.12 | 0.12 | 0.12 | 0.12 |
| $Lb_{sh}$ | 2.8La | 2.8La | 2.8La | 2.8La |
| $Lb_{ce}$ | 5.5La | 5.5La | 5.5La | 5.5La |
| Sg1/St | 0.12 | 0.12 | 0.12 | 0.12 |
| Sg2/St | 0.10 | 0.10 | 0.10 | 0.10 |
| Index | | | | |
| Ride quality | 100 | 98 | 100 | 98 |
| Steering stability | 100 | 100 | 92 | 96 |

Table 5

| | Example | | | | | | | | | |
|---|---|---|---|---|---|---|---|---|---|---|
| | 11 | 12 | 13 | 14 | 15 | 16 | 17 | 18 | 19 | 20 |
| Compounding of tread rubber | C | B | A | D | E | C | B | E | E | B |
| Tire | Tire 5 | Tire 5 | Tire 5 | Tire 5 | Tire 5 | Tire 5 | Tire 5 | Tire 5 | Tire 6 | Tire 6 |
| $S_{ce}$/Sr | 0.45 | 0.45 | 0.45 | 0.45 | 0.45 | 0.45 | 0.45 | 0.65 | 0.45 | 0.45 |

(continued)

| | Example | | | | | | | | | |
|---|---|---|---|---|---|---|---|---|---|---|
| | 11 | 12 | 13 | 14 | 15 | 16 | 17 | 18 | 19 | 20 |
| La/Lb1 | 0.40 | 0.25 | 0.42 | 0.26 | 0.31 | 0.48 | 0.19 | 0.70 | 0.31 | 0.19 |
| La/Lb | 0.18 | 0.12 | 0.18 | 0.12 | 0.15 | 0.15 | 0.14 | 0.40 | 0.15 | 0.14 |
| $Lb_{sh}$ | 1.8La | 2.8La | 1.9La | 2.7La | 2.3La | 2.4La | 2.5La | 2.3La | 2.3La | 2.5La |
| $Lb_{ce}$ | 3.7La | 5.5La | 3.7La | 5.4La | 4.5La | 4.3La | 4.4La | 4.5La | 4.5La | 4.4La |
| Sg1/St | 0.12 | 0.12 | 0.12 | 0.12 | 0.12 | 0.12 | 0.12 | 0.12 | 0.12 | 0.12 |
| Sg2 / St | 0.10 | 0.10 | 0.10 | 0.10 | 0.10 | 0.10 | 0.10 | 0.10 | 0.10 | 0.10 |
| Index | | | | | | | | | | |
| Ride quality | 108 | 108 | 108 | 108 | 108 | 116 | 112 | 106 | 104 | 108 |
| Steering stability | 108 | 108 | 104 | 112 | 112 | 116 | 116 | 110 | 104 | 112 |

In Table 5, Examples 13, 15, 18, and 19 are not according to the invention.

Table 6

| | Comparative example | | | |
|---|---|---|---|---|
| | 5 | 6 | 7 | 8 |
| Compounding of tread rubber | F | F | E | E |
| Tire | Tire 4 | Tire 6 | Tire 6 | Tire 6 |
| $S_{ce}$/Sr | 0.45 | 0.45 | 0.30 | 0.83 |
| La/Lb1 | 0.25 | 0.25 | 0.25 | 0.25 |
| La/Lb | 0.12 | 0.12 | 0.12 | 0.12 |
| $Lb_{sh}$ | 2.8La | 2.8La | 2.8La | 2.8La |
| $Lb_{ce}$ | 5.5La | 5.5La | 5.5La | 5.5La |
| Sg1/St | 0.12 | 0.12 | 0.12 | 0.12 |
| Sg2/St | 0.10 | 0.10 | 0.10 | 0.10 |
| Index | | | | |
| Ride quality | 100 | 98 | 100 | 98 |
| Steering stability | 100 | 100 | 94 | 96 |

From the results in Tables 1 and 6, it can be found that the pneumatic tire of the present disclosure, in which a cross-sectional width and an outer diameter of the tire, a viscoelasticity of a tread rubber, and a tread pattern are made specific conditions, has ride quality at low temperatures and steering stability during high-speed traveling being improved in a well-balanced manner.

EXPLANATION OF NUMERALS

1 Tread part
11, 12, 13 Circumferential groove
16 Outer shoulder land part
17 Inner shoulder land part
18 Outer center land part

19 Inner center land part
21 Outer shoulder width direction groove
22 Inner shoulder width direction groove
23 Outer shoulder sipe
24 Inner shoulder sipe
25 Outer center width direction groove
26 Inner center width direction groove
27 Outer center sipe
28 Inner center sipe
29 Outer shoulder fine groove
30 Inner shoulder fine groove
To Outer tread end
Ti Inner tread end
W Tire width direction

## Claims

**1.** A pneumatic tire comprising a tread part,

wherein the tread part has two or more circumferential grooves extending continuously in a circumferential direction of the tire, a pair of shoulder land parts partitioned by the circumferential grooves and a center land part located between the pair of shoulder land parts, and width direction grooves, and may arbitrarily have sipes;
wherein, when a tire cross-sectional width is Wt (mm) and a tire outer diameter is Dt (mm), Wt and Dt satisfy Equation (1) below;
wherein, when a length of the tire in the circumferential direction of the tire along the tire equator C is La and a total sum of a total Lb1 of edge component lengths in a width direction of the width direction grooves and a total Lb2 of edge component lengths in a width direction of the sipes is Lb, La and Lb satisfy Equation (2) below, wherein the edge component lengths in the width direction of the width direction grooves and the sipes refer to lengths of projections in the width direction of the width direction grooves and sipes:

wherein the tread part has at least one rubber layer composed of a rubber composition comprising a rubber component; and
wherein tan δ at 5°C (5°C tan δ), tan δ at 20°C (20°C tan δ), and tan δ at 50°C (50°C tan δ) of the rubber composition measured under conditions of frequency 10 Hz and elongation strain 2.5% satisfy Equation (3) and Equation (4) below:

$$\text{Equation (1)}\ 1963.4\text{mm} \leqq (\pi/4)\times(Dt^{\wedge}2/Wt) \leqq 2827.4\text{mm};$$

$$\text{Equation (2)}\ 0.10 \leqq La/Lb \leqq 0.50.$$

$$\text{Equation (3)}\ 0.01 \leqq |20^\circ\text{C}\ \tan\delta + 50^\circ\text{C}\ \tan\delta|/2 \leqq 0.17;$$

and

$$\text{Equation (4)}\ 0.30 \leqq |5^\circ\text{C}\ \tan\delta + 20^\circ\text{C}\ \tan\delta|/2 \leqq 0.60,$$

wherein 5°C tan δ of the rubber composition is 0.70 or more;
wherein 20°C tan δ of the rubber composition is 0.15 or less; and
wherein tan δ is measured according to the method defined in the description.

**2.** The pneumatic tire of claim 1, wherein a value of the Equation (3) is less than 0.15.

**3.** The pneumatic tire of claim 1 or 2, wherein a value of the Equation (4) is 0.35 to 0.55.

**4.** The pneumatic tire of any one of claims 1 to 3, wherein a value of the Equation (3) is less than 0.14.

**5.** The pneumatic tire of any one of claims 1 to 4, wherein a value of the Equation (4) is 0.40 to 0.55.

**6.** The pneumatic tire of any one of claims 1 to 5, wherein a ratio $Lb_{sh}/Lb_{ce}$ between a total sum $Lb_{sh}$ of a total $Lb_{sh}1$ of edge component lengths in a width direction of the width direction grooves in the shoulder land parts and a total $Lb_{sh}2$ of edge component lengths in a width direction of sipes in the shoulder land parts and a total sum $Lb_{ce}$ of a total $Lb_{ce}1$ of edge component lengths in a width direction of the width direction grooves in the center land part and a total $Lb_{ce}2$ of edge component lengths in a width direction of sipes in the center land part satisfies $Lb_{sh}/ Lb_{ce} < 1$.

**7.** The pneumatic tire of any one of claims 1 to 6, wherein a land part width of the at least one center land part is 1.4 times or more of a groove depth of a circumferential groove being adjacent in a width direction of the tire.

**8.** The pneumatic tire of any one of claims 1 to 7, wherein, when a grounding area of the tread part is St and a total sum of a total area Sg1 of the circumferential grooves and a total area Sg2 of the width direction grooves and sipes is Sg, St and Sg satisfy Equation (6) below:

$$\text{Equation (6)}\ 0.15 \leqq Sg/St \leqq 0.35.$$

**9.** The pneumatic tire of claim 8, wherein Sg1/St is 0.09 to 0.16 and Sg2/St is 0.08 to 0.14.

**10.** The pneumatic tire of any one of claims 1 to 9, wherein a ratio of a value of the Equation (3) to a value of the Equation (2) is 0.30 to 1.05.

**11.** The pneumatic tire of any one of claims 1 to 10, wherein a ratio of a value of the Equation (4) to a value of the Equation (2) is 2.1 to 3.8.

**12.** The pneumatic tire of claim 8 or 9, or of claim 10 or 11, when dependent on claim 8, wherein a ratio of a value of the Equation (4) to a value of the Equation (6) is 1.7 to 2.7.

**13.** The pneumatic tire of any one of claims 1 to 12, wherein a value of the Equation (2) is 0.12 to 0.45 and a value of the Equation (4) is 0.35 to 0.55.

**14.** The pneumatic tire of any one of claims 1 to 13, wherein the tire is a tire for a passenger car.

**Patentansprüche**

**1.** Luftreifen, der einen Laufstreifenteil umfasst,

wobei der Laufstreifenteil zwei oder mehr Umfangsrillen, die sich durchgehend in einer Umfangsrichtung des Reifens erstrecken, ein Paar Schulterpositivprofilteile, die durch die Umfangsrillen abgeteilt sind, und einen Zentrumspositivprofilteil, der sich zwischen dem Paar Schulterpositivprofilteile befindet, und Breitenrichtungsrillen aufweist, und optional Einschnitte aufweisen kann;
wobei, wenn eine Reifenquerschnittsbreite Wt (mm) ist und ein Reifenaußendurchmesser Dt (mm) ist, Wt und Dt die nachstehende Gleichung (1) erfüllen;
wobei, wenn eine Länge des Reifens in der Umfangsrichtung des Reifens entlang des Reifenäquators C La ist, und eine Gesamtsumme eines Gesamtbetrags Lb1 an Kantenkomponentenlängen in einer Breitenrichtung der Breitenrichtungsrillen und eines Gesamtbetrags Lb2 an Kantenkomponentenlängen in einer Breitenrichtung der Einschnitte Lb ist, La und Lb die nachstehende Gleichung (2) erfüllen, wobei die Kantenkomponentenlängen in der Breitenrichtung der Breitenrichtungsrillen und der Einschnitte Längen von Projektionen in der Breitenrichtung der Breitenrichtungsrillen und Einschnitte bezeichnen:

wobei der Laufstreifenteil mindestens eine Kautschukschicht aufweist, die mit einer Kautschukzusammensetzung aufgebaut ist, die eine Kautschukkomponente umfasst; und
wobei tan δ bei 5°C (5°C tan δ), tan δ bei 20°C (20°C tan δ), und tan δ bei 50°C (50°C tan δ) der Kautschukzusammensetzung, gemessen unter den Bedingungen einer Frequenz von 10 Hz und einer Dehnungsbeanspruchung von 2,5% die nachstehende Gleichung (3) und Gleichung (4) erfüllen:

$$\text{Gleichung (1) } 1963{,}4\text{mm} \leqq (\pi/4)\times(Dt\hat{}2/Wt) \leqq 2827{,}4\text{mm};$$

$$\text{Gleichung (2) } 0{,}10 \leqq La/Lb \leqq 0{,}50.$$

$$\text{Gleichung (3) } 0{,}01 \leqq |20°C\ \tan\delta + 50°C\ \tan\delta|/2 \leqq 0{,}17;$$

und

$$\text{Gleichung (4) } 0{,}30 \leqq |5°C\ \tan\delta + 20°C\ \tan\delta|/2 \leqq 0{,}60,$$

wobei 5°C tan $\delta$ der Kautschukzusammensetzung 0,70 oder mehr beträgt;
wobei 20°C tan $\delta$ der Kautschukzusammensetzung 0,15 oder weniger beträgt; und
wobei tan $\delta$ gemäß dem in der Beschreibung definierten Verfahren gemessen ist.

**2.** Luftreifen nach Anspruch 1, wobei ein Wert der Gleichung (3) weniger als 0,15 beträgt.

**3.** Luftreifen nach Anspruch 1 oder 2, wobei ein Wert der Gleichung (4) 0,35 bis 0,55 beträgt.

**4.** Luftreifen nach einem der Ansprüche 1 bis 3, wobei ein Wert der Gleichung (3) weniger als 0,14 beträgt.

**5.** Luftreifen nach einem der Ansprüche 1 bis 4, wobei ein Wert der Gleichung (4) 0,40 bis 0,55 beträgt.

**6.** Luftreifen nach einem der Ansprüche 1 bis 5, wobei ein Verhältnis $Lb_{sh}/Lb_{ce}$ zwischen einer Gesamtsumme $Lb_{sh}$ eines Gesamtbetrags $Lb_{sh}1$ an Kantenkomponentenlängen in einer Breitenrichtung der Breitenrichtungsrillen in den Schulterpositivprofilteilen und eines Gesamtbetrags $Lb_{sh}2$ an Kantenkomponentenlängen in einer Breitenrichtung von Einschnitten in den Schulterpositivprofilteilen und einer Gesamtsumme $Lb_{ce}$ eines Gesamtbetrags $Lb_{ce}1$ an Kantenkomponentenlängen in einer Breitenrichtung der Breitenrichtungsrillen in dem Zentrumspositivprofilteil und eines Gesamtbetrags $Lb_{ce}2$ an Kantenkomponentenlängen in einer Breitenrichtung von Einschnitten in dem Zentrumspositivprofilteil $Lb_{sh}/Lb_{ce} < 1$ erfüllt.

**7.** Luftreifen nach einem der Ansprüche 1 bis 6, wobei eine Positivprofilteilbreite des mindestens einen Zentrumspositivprofilteils das 1,4-fache oder mehr einer Rillentiefe einer Umfangsrille beträgt, die in einer Breitenrichtung des Reifens benachbart ist.

**8.** Luftreifen nach einem der Ansprüche 1 bis 7, wobei, wenn eine Bodenkontaktfläche des Laufstreifenteils St ist, und eine Gesamtsumme einer Gesamtfläche Sg1 der Umfangsrillen und einer Gesamtfläche Sg2 der Breitenrichtungsrillen und Einschnitte Sg ist, St und Sg die nachstehende Gleichung (6) erfüllen:

$$\text{Gleichung (6) } 0{,}15 \leqq Sg/St \leqq 0{,}35.$$

**9.** Luftreifen nach Anspruch 8, wobei Sg1/St 0,09 bis 0,16 beträgt und Sg2/St 0,08 bis 0,14 beträgt.

**10.** Luftreifen nach einem der Ansprüche 1 bis 9, wobei ein Verhältnis eines Werts der Gleichung (3) zu einem Wert der Gleichung (2) 0,30 bis 1,05 beträgt.

**11.** Luftreifen nach einem der Ansprüche 1 bis 10, wobei ein Verhältnis eines Werts der Gleichung (4) zu einem Wert der Gleichung (2) 2,1 bis 3,8 beträgt.

**12.** Luftreifen nach Anspruch 8 oder 9, oder nach Anspruch 10 oder 11, wenn abhängig von Anspruch 8, wobei ein Verhältnis eines Werts der Gleichung (4) zu einem Wert der Gleichung (6) 1,7 bis 2,7 beträgt.

13. Luftreifen nach einem der Ansprüche 1 bis 12, wobei ein Wert der Gleichung (2) 0,12 bis 0,45 beträgt und ein Wert der Gleichung (4) 0,35 bis 0,55 beträgt.

14. Luftreifen nach einem der Ansprüche 1 bis 13, wobei der Reifen ein Reifen für einen Personenkraftwagen ist.

**Revendications**

1. Pneumatique comprenant une partie de bande de roulement,

dans lequel la partie de bande de roulement a deux ou plus de deux sillons circonférentiels s'étendant en continu dans une direction circonférentielle du pneu, une paire de parties de bord de sillon en épaulement partitionnées par les sillons circonférentiels et une partie de bord de sillon centrale située entre la paire des parties de bord de sillon en épaulement et des sillons de direction de largeur, et peuvent arbitrairement avoir des lamelles ;
dans lequel, lorsqu'une largeur trans-sectionnelle de pneu est Wt (mm) et qu'un diamètre externe de pneu est Dt (mm), Wt et Dt satisfont l'équation (1) ci-dessous ;
dans lequel, lorsqu'une longueur du pneu dans la direction circonférentielle du pneu le long de l'équateur C du pneu et une somme totale d'un total Lb1 de longueurs de composant de bord dans une direction de largeur des sillons de direction de largeur et un total Lb2 de longueurs de composant de bord dans une direction de largeur des lamelles est Lb, La et Lb satisfont l'équation (2) ci-dessous, dans lequel les longueurs de composant de bord dans la direction de largeur des sillons de direction de largeur et des lamelles se rapportent aux longueurs de projections dans la direction de largeur des sillons et lamelles de direction de largeur :

dans lequel la partie de bande de roulement a au moins une couche de caoutchouc composée d'une composition de caoutchouc comprenant un composant de caoutchouc ;
et
dans lequel la tan δ à 5 °C (5 °C tan δ), la tan δ à 20 °C (20 °C tan δ) et la tan δ à 50 °C (50 °C tan δ) de la composition de caoutchouc mesurées dans des conditions de fréquence de 10 Hz et une contrainte d'élongation de 2,5 % satisfont l'équation (3) et l'équation (4) ci-dessous :

$$\text{Equation (1) } 1963{,}4\ \text{mm} \leq (\pi / 4) \times (Dt\text{^}2 / Wt) \leq 2827{,}4\ \text{mm} ;$$

$$\text{Equation (2) } 0{,}10 \leq La / Lb \leq 0{,}50,$$

$$\text{Equation (3) } 0{,}01 \leq |\ 20\ °C \tan\delta + 50\ °C \tan\delta\ | / 2 \leq 0{,}17 ;$$

et

$$\text{Equation (4) } 0{,}30 \leq |\ 5\ °C \tan\delta + 20\ °C \tan\delta| / 2 \leq 0{,}60,$$

dans lequel 5 °C tan δ de la composition de caoutchouc est de 0,70 ou plus ;
dans lequel 20 °C tan δ de la composition de caoutchouc est de 0,15 ou moins ; et
dans lequel tan δ est mesurée selon la procédé défini dans la description.

2. Pneumatique selon la revendication 1, dans lequel une valeur de l'équation (3) est de moins de 0,15.

3. Pneumatique selon la revendication 1 ou 2, dans lequel une valeur de l'équation (4) est de 0,35 à 0,55.

4. Pneumatique selon l'une quelconque des revendications 1 à 3, dans lequel une valeur de l'équation (3) est de moins de 0,14.

5. Pneumatique selon l'une quelconque des revendications 1 à 4, dans lequel une valeur de l'équation (4) est de 0,40 à 0,55.

6. Pneumatique selon l'une quelconque des revendications 1 à 5, dans lequel un rapport $Lb_{sh}/Lb_{ce}$ entre une somme totale $Lb_{sh}$ d'un total $Lb_{sh}1$ de longueurs de composant de bord dans une direction de largeur des sillons de direction de largeur dans les parties de bord de sillon en épaulement et un total $Lb_{sh}2$ de longueurs de composant de bord dans une direction de largeur des lamelles dans les parties de bord de sillon en épaulement et une somme totale $Lb_{ce}$ d'un total$Lb_{ce}1$ de longueurs de composant de bord dans une direction de largeur des sillons de direction de largeur dans la partie de bord de sillon centrale et un total $Lb_{ce}2$ de longueurs de composant de bord dans une direction de largeur des lamelles dans la partie de bord de sillon centrale satisfait $Lb_{sh} / Lb_{ce} < 1$.

7. Pneumatique selon l'une quelconque des revendications 1 à 6, dans lequel une largeur de partie de bord de sillon de l'au moins une partie de bord de sillon centrale est 1,4 fois ou plus celle d'une profondeur de sillon d'un sillon circonférentiel est adjacent dans une direction de largeur du pneu.

8. Pneumatique selon l'une quelconque des revendications 1 à 7, dans lequel, lorsqu'une surface de sol de la partie de bande de roulement est St et une somme totale d'une surface totale Sg1 des sillons circonférentiels et une surface totale Sg2 des sillons de direction de largeur et des lamelles est Sg, St et Sg satisfont l'équation (6) ci-dessous :

$$\text{Equation (6) } 0{,}15 \leq Sg / St \leq 0{,}35.$$

9. Pneumatique selon la revendication 8, dans lequel Sg1 / St est de 0,09 à 0,16 et Sg2 / St est de 0,08 à 0,14.

10. Pneumatique selon l'une quelconque des revendications 1 à 9, dans lequel un rapport d'une valeur de l'équation (3) à une valeur de l'équation (2) est de 0,30 à 1,05.

11. Pneumatique selon l'une quelconque des revendications 1 à 10, dans lequel un rapport d'une valeur de l'équation (4) à une valeur de l'équation (2) est de 2,1 à 3,8.

12. Pneumatique selon la revendication 8 ou 9 ou selon la revendication 10 ou 11 lorsqu'elles dépendent de la revendication 8, dans lequel un rapport d'une valeur de l'équation (4) à une valeur de l'équation (6) est de 1,7 à 2,7.

13. Pneumatique selon l'une quelconque des revendications 1 à 12, dans lequel une valeur de l'équation (2) est de 0,12 à 0,45 et une valeur de l'équation (4) est de 0,35 à 0,55.

14. Pneumatique selon l'une quelconque des revendications 1 à 13, dans lequel le pneu est un pneu pour voiture à passagers.

FIG. 1

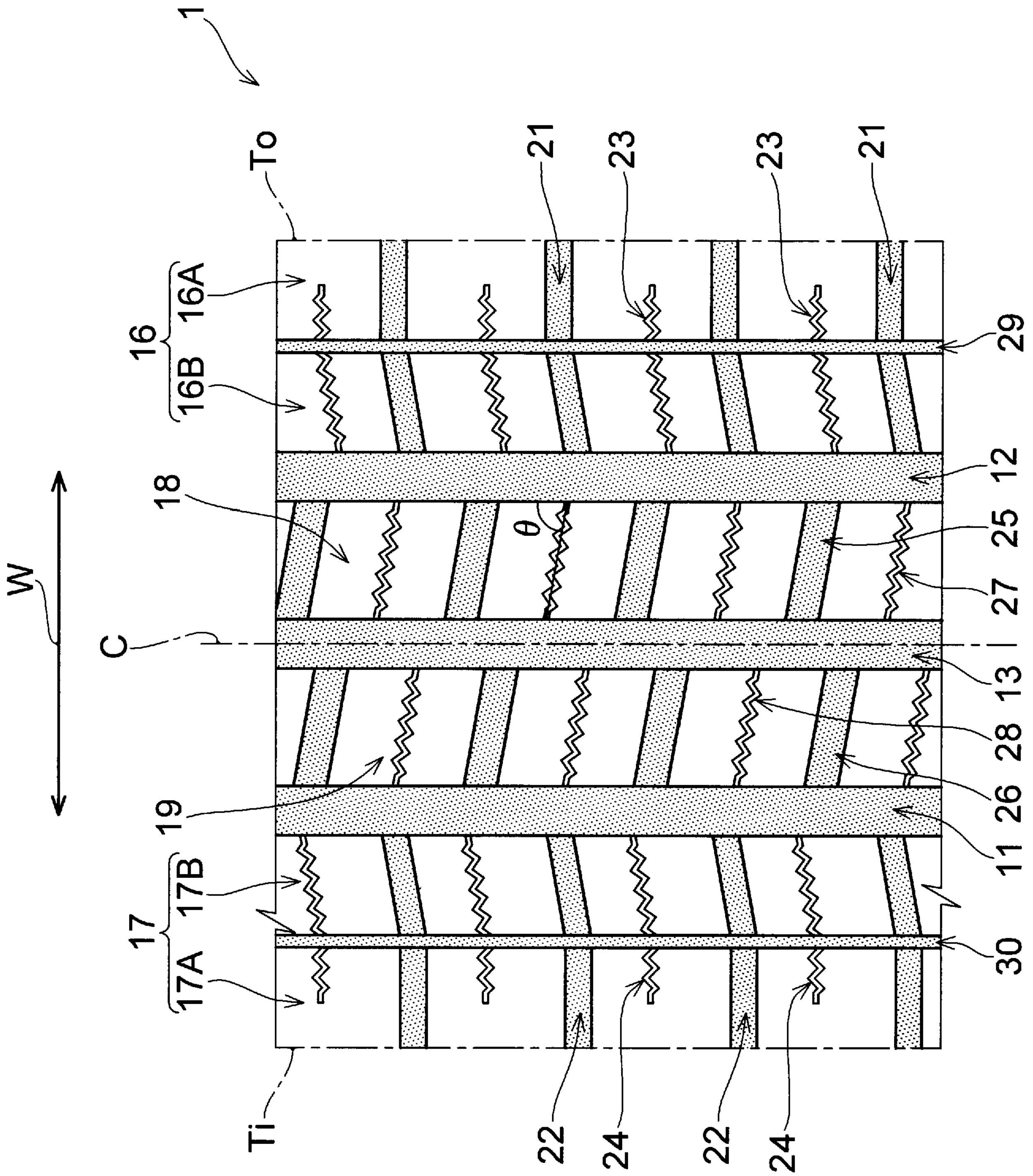
1
To
Ti
16
16A
16B
17
17A
17B
18
19
W
C
θ
11
12
13
21
22
23
24
25
26
27
28
29
30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004269684 A
- US 2019168542 A1